# EUROPÄISCHE PATENTANMELDUNG

(11) **EP 4 124 403 A1**
(43) Veröffentlichungstag der Anmeldung: **01.02.2023**
(21) Anmeldenummer: 22176903.7
(22) Anmeldetag: 02.06.2022
(51) Int. Cl.: B23B 31/117

(54) **SCHRUMPFFUTTER MIT NEUARTIGER BEDÄMPFUNG**

(30) Priorität: 30.07.2021 DE 102021119935
(71) Anmelder: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang

(57) **Zusammenfassung**

Die Erfindung betrifft Spannfutter zum Spannen von einen Werkzeugschaft aufweisenden Werkzeugen.

Dieses Spannfutter sieht eine an ihrem freien Ende offene Hülsenpartie (4) aus bevorzugt elektrisch leitendem Werkstoff, die eine Werkzeugaufnahme (5) zum reibschlüssigen Festsetzen des Werkzeugschafts im Presssitz durch Einschrumpfen ausbildet, vor.

Das Spannfutter ist dadurch gekennzeichnet, dass die Hülsenpartie (4) - vorzugsweise jedenfalls über die gesamte axiale Länge der Werkzeugaufnahme (5) hinweg - aus einer Innenhülse (7) besteht und einer diese im betriebsbereiten Zustand aufnehmenden, spielfrei mit ihr gefügten Außenhülse (8), die vorzugweise ebenfalls aus einem elektrisch leitenden Werkstoff besteht.

## Beschreibung

Die Erfindung betrifft Spannfutter nach dem Oberbegriff der unabhängigen Ansprüche, deren besondere Verwendung und ein damit gebildetes Spannfuttersystem, jeweils nach dem Oberbegriff der entsprechenden Hauptansprüche.

### TECHNISCHER HINTERGRUND

Spannfutter in Gestalt von Schrumpffuttern sind in der Praxis sehr bewährt, weil sie mit geringem Aufwand sehr hohe Haltekräfte aufbringen können. Außerdem bieten sie die Möglichkeit, das eingespannte Werkzeug mit einer hohen Biegesteifigkeit zu halten, so dass es exakt geführt wird und beim Zerspanvorgang eine hochgenaue Geometrie am Werkstück erzeugt. Gleichzeitig spannen sie aber den Werkzeugschaft oft sehr starr bzw. hart ein, wodurch die Schwingungsproblematik an Bedeutung gewinnt.

Die Qualität der Einspannung eines Schaftwerkzeugs ist von großer Bedeutung für die mit dem Werkzeug zu erreichende Bearbeitungsqualität und nicht selten auch für die Werkzeugstandzeit.

Dies gilt umso mehr für die Hochgeschwindigkeitszerspanung von Metallen, insbesondere mit einer Schnittgeschwindigkeit von mehr als 800 m/min oder gar mehr als 1.100 m/min.

Die Qualität der Einspannung hängt unter anderem auch davon ab, wie gut eventuell auftretende Schwingungen gedämpft werden können. Eine wesentliche Quelle solcher Schwingungen kann zum Beispiel der schnelle Wechsel der Anzahl der aktuell spanabnehmend mit dem Werkstück im Eingriff befindlichen Fräserschneiden sein. Hieraus können zum Beispiel erheblich beeinträchtigende Torsionsschwingungen resultieren.

Andersartige, aber ebenfalls schädliche Schwingungen können aus der Tendenz eines Schaftwerkzeugs und insbesondere eines Schaftfräsers resultieren, im Betrieb zu walken. Unter Walken versteht man die mit jeder Umdrehung wiederkehrende und sich im Laufe der Umdrehung örtlich ändernde geringe elastische Verformung des Schafts durch den Kontakt mit dem Werkstück unter der Last des Vorschubs.

### AUFGABE

Dementsprechend ist es die Aufgabe der Erfindung, ein Werkzeugspannfutter anzugeben, welches große Spannkräfte aufbringen kann und gleichzeitig besser mit auftretenden Schwingungen umgehen kann.

### LÖSUNG

Die Lösung erfolgt mit den Merkmalen des Anspruchs 1, des weiteren unabhängigen Anspruchs 19 und des ebenfalls unabhängigen Anspruchs 21 oder den Merkmalen weiterer für einen Hauptanspruch hinterlegter Ansätze.

Hierzu wird vom Anspruch 1 ein Werkzeugspannfutter zum Spannen von einen Werkzeugschaft aufweisenden Werkzeugen vorgeschlagen mit einer an ihrem freien Ende offenen Hülsenpartie aus bevorzugt elektrisch leitendem Werkstoff. Die besagte Hülsenpartie bildet eine Werkzeugaufnahme zum reibschlüssigen Festsetzen des Werkzeugschafts im Presssitz durch Einschrumpfen aus. Erfindungsgemäß zeichnet sich das Werkzeugspannfutter nicht zuletzt dadurch aus, dass die Hülsenpartie - vorzugsweise jedenfalls über die gesamte axiale Länge der Werkzeugaufnahme hinweg - aus einer Innenhülse besteht und einer diese im betriebsbereiten Zustand aufnehmenden, spielfrei mit ihr gefügten Außenhülse, die vorzugweise ebenfalls aus einem elektrisch leitenden Werkstoff besteht.

Durch diese Ausgestaltung wird eine deutliche Herabsetzung der Neigung des Werkzeugspannfutters zu schädlichen Schwingungen erreicht.

Dafür schein verantwortlich zu sein, dass die Grenzschicht, an der die Innenhülse und die Außenhülse miteinander im Bereich der Werkzeugaufnahme in Kontakt stehen. Nicht zuletzt, wenn Metall auf Metall trifft, tritt eine Dämpfung bzw. verringerte Fähigkeit, Schwingungen zu übertragen, auf. Das scheint nicht zuletzt dann zu gelten, wenn die Innen- und die Außenhülse miteinander in im Normalbertrieb unlösbaren Kontakt stehen, beispielsweise miteinander verpresst sind, insbesondere, weil sie schon vor der Einspannung eines Werkzeugschafts und der damit einhergehenden Dehnungsbehinderung miteinander verpresst sind und ihre Verpressung durch das Einspannen des Werkzeugschafts noch gesteigert wird.

Weiter kann dann darüber hinaus eine axiale Abstützung der Außenhülse an dem Spannfuttergrundkörper erfolgen, was beispielsweise durch einen Befestigungsflansch an der Außenhülse und eine komplementäre Ringschulter am Spannfuttergrundkörper 2 realisiert sein kann. D.h., der Befestigungsflansch bzw. die Außenhülse stützt sich axial am Spannfuttergrundkörper ab.

Auch diese Ausgestaltung trägt zu einer deutlichen Herabsetzung der Neigung des Werkzeugspannfutters zu schädlichen Schwingungen bei.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

### AUSFÜHRUNGSBE ISPIELE

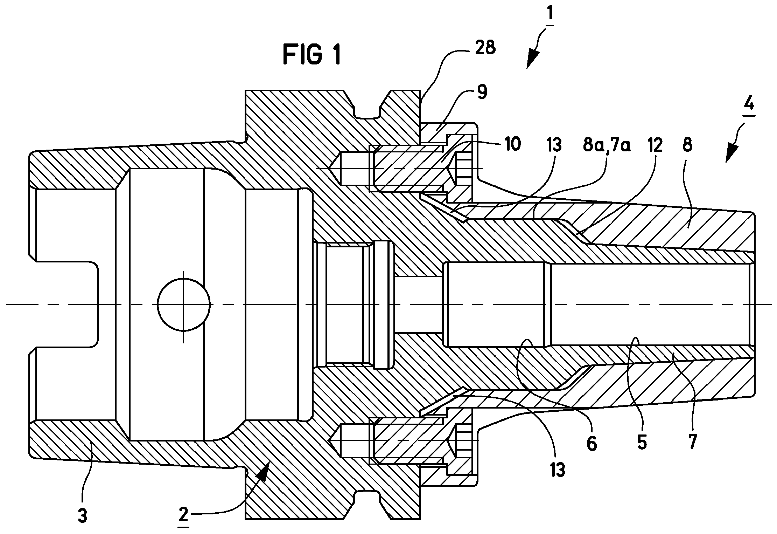

Recht gut mit über weite Strecken hinweg allgemeiner Bedeutung - auch für die anderen nicht allzu detailliert beschriebenen Figuren - lässt sich die Erfindung anhand der Figur 1 erläutern.

Das Werkzeugspannfutter 1 weist einen Spannfuttergrundkörper 2 auf. Dieser besitzt hier an seinem einen Ende 3 eine Kupplung zum Ankuppeln an eine Werkzeugmaschine, bei der es sich in Figur 1 beispielhaft um eine HSK-Kupplung handelt. Alternativ ist aber genauso gut eine SK-Kupplung oder ein anderes System denkbar. Die für die hier bevorzugt einzusetzenden Kupplungen verwendeten Begriffe HSK und SK sind den Fachleuten geläufig, da vielerorts standardmäßig verwendet.

An seinem der Kupplung abgewandten Ende bildet das Werkzeugspannfutter 1 eine Hülsenpartie 4 aus. Innerhalb der Hülsenpartie ist eine Werkzeugaufnahme 5 verwirklicht, die den Schaft des Werkzeugs festhält. Die Hülsenpartie bildet in axialer Richtung hinter dem Werkzeugschaft einen von diesem bzw. zum Halten von diesem nicht genutzten Auslaufbereich 6. Über diesen Auslaufbereich kann Kühlmittel herangeführt werden, was mit Seitenblick auf die weiteren Figuren gesagt wird, wo das zum Teil offenbart wird.

Diese Hülsenpartie 4 ist so ausgestaltet und wird derart verwendet, dass sie einen Werkzeugschaft im Presssitz halten kann, sodass dieser während der Arbeit mit dem Werkzeug gegenüber dem Werkzeughalter weder rotiert noch in axialer Richtung ausgezogen wird oder verrutscht, jedenfalls in wesentlicher Art und Weise. Die Einzelheiten des Schrumpfprozesses und der entsprechenden Werkzeugspannfuttergestaltung sind in der deutschen Patentanmeldung DE 199 15 412 A1 beschrieben, die hiermit vollumfänglich zum Gegenstand dieser Offenbarung gemacht wird und auf deren Merkmale daher gegebenenfalls zur Einschränkung der heutigen Ansprüche zurückgegriffen werden kann.

Das erfindungsgemäße Werkzeugspannfutter 1 unterscheidet sich in Bezug auf seine Hülsenpartie 4 hiervon dadurch, dass die Hülsenpartie 4 zweilagig aufgebaut ist, jedenfalls entlang des axialen Bereichs, in dem sie die Werkzeugaufnahme 5 ausbildet, oft sogar darüber hinaus bis über den Bereich des Auslaufs 6 hinweg, wie hier in der Figur 1 erkennbar.

Sie ist zweilagig aufgebaut, indem sie aus einer Innenhülse 7 besteht und einer Außenhülse 8. Beide bestehen ihrerseits vorzugsweise aus Metall bzw. Stahl, aber vorzugsweise aus unterschiedlichen Stahlsorten.

In einer Ausführungsform kann der Spannfuttergrundkörper 2 aus verschiedenen Materialien bestehen. So kann das Ende 3 beispielsweise aus Stahl und die Innenhülse 7, die beispielsweise mit einem additiven Verfahren auf das Ende 3 aufgebaut wird, aus einem anderen Material wie z. B. Aluminium bestehen.

Die Innenhülse 7 und die Außenhülse 8 sind spielfrei miteinander verbunden. Diese Spielfreiheit besteht im Regelfall auch dann, wenn das Werkzeugspannfutter 1 noch keinen Schaft spannt, sondern bei Raumtemperatur unbenutzt auf seinen nächsten Einsatz wartet.

Nicht immer, aber regelmäßig und daher besonders vorteilhaft sind die Innenhülse 7 und die Außenhülse 8 durch einen Presssitz miteinander verbunden. Sie stehen dadurch besonders innig in Kontakt, mit hoher, schwingungsdämpfender Friktion. Der Presssitz kann dadurch zustande kommen, dass die Innenhülse 7, zumindest entlang der überwiegenden axialen Länge der Werkzeugaufnahme 5, eine kegelige Außenumfangsfläche aufweist.

Die Außenhülse 8 weist dann eine dazu komplementäre, entsprechend kegelige Innenumfangsfläche auf.

Die Außenhülse 8 wird in axialer Richtung auf die Innenhülse 7 aufgeschoben oder aufgepresst. Dies kann durch eine Schrumpfoperation erfolgen und/oder bevorzugt durch die weitere Ausgestaltung, die die Figur 1 zeigt. Zu diesem Zweck hat die Außenhülse 8 einen an ihren eigentlichen Hülsenabschnitt, der für das Halten verantwortlich ist, anschließenden Zentrierabschnitt 8a und einen daran anschließenden Befestigungsflansch 9. Der Befestigungsflansch 9 hat Durchgangslöcher. Dem Befestigungsflansch 9 ist hier auf der Seite des Spannfuttergrundkörpers 2 eine komplementäre Ringschulter 28 an dem Spannfuttergrundkörper 2 zugeordnet, worüber der Befestigungsflansch 9 bzw. die Außenhülse 8 axial am Spannfuttergrundkörper 2 abgestützt wird - und so zur Steifigkeit beiträgt und insbesondere auch schwingungsdämpfend wirkt.

Die Ringschulter 28 trägt an entsprechender Stelle im vorliegenden Fall Sacklöcher, die mit einem Mutterngewinde versehen sind. Auf diese Art und Weise kann durch Festzuziehen der Spannschrauben 10 die axiale Verpressung zwischen den Kegelflächen der Innenhülse 7 und der Außenhülse 8 erreicht werden.

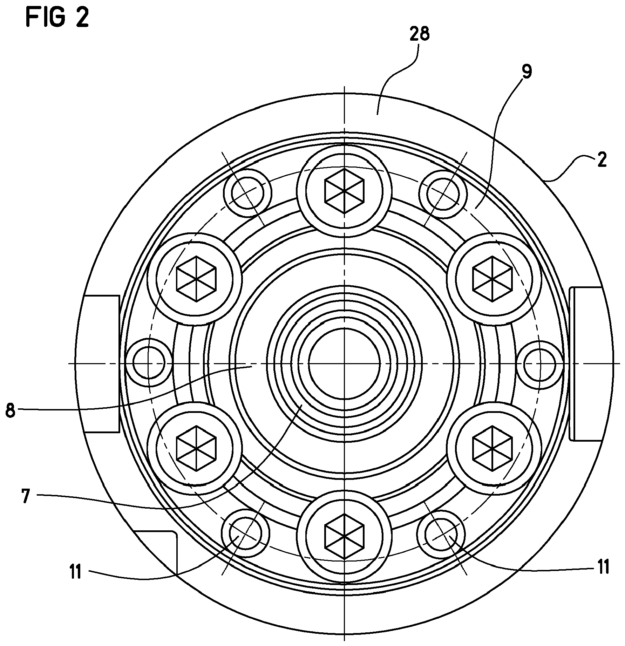

Die Figur 2 zeigt in diesem Zusammenhang ein weiteres vorteilhaftes Detail, nämlich die Tatsache, dass der Befestigungsflansch 9 der Außenhülse weitere Durchgangslöcher 11 mit einem Innengewinde trägt, die als Abdrückorgane zum Wiederentfernen der Außenhülse 8 von der Innenhülse 7 dienen. Nun ist noch einmal auf den schon angesprochenen Zentrierabschnitt 8a einzugehen. Die Innenhülse 7 bzw. der ihr zugeordnete Spannfuttergrundkörper 2 besitzt ebenfalls einen komplementären Zentrierabschnitt 7a. Die Gestaltung in Bezug auf die Zentrierabschnitte ist so gewählt, dass die Außenhülse 8 beim Aufschieben auf die Innenhülse 7 dort mit ihrem Zentrierabschnitt 8a auf dem zugeordneten Zentrierabschnitt 7a zu liegen kommt, noch bevor die Verpressung zwischen der Innen- und der Außenhülse beginnt. Das erleichtert das Verpressen mithilfe der bereits angesprochenen Schrauben ganz erheblich.

Bemerkenswert ist noch, dass es sich als besonders günstig erwiesen hat, wenn zwischen dem Zentrierabschnitt und der eigentlichen Hülsenpartie ein Übergangsabschnitt 12 anzutreffen ist, wie er in Figur 1 gut zu erkennen ist.

In diesem Übergangsabschnitt 12 berühren sich die Außenhülse 8 und die Innenhülse 7 nicht, auch wenn sie vollständig montiert und einsatzbereit sind. Sinngemäß Gleiches gilt vorteilhafterweise für den flanschnahen Bereich, der in der Figur 1 mit der Bezugsziffer 13 gekennzeichnet ist. Auch hier besteht ein Abstand zwischen den bevorzugt schräg verlaufenden Innenseiten des Flansches 9 und dem Spannfuttergrundkörper 2. Hierdurch und in gleicher Weise durch den angesprochenen Übergangsabschnitt 12 wird verhindert, dass die Innen- und die Außenhülse beim Fügen vorzeitig und unkontrolliert auf Block gehen.

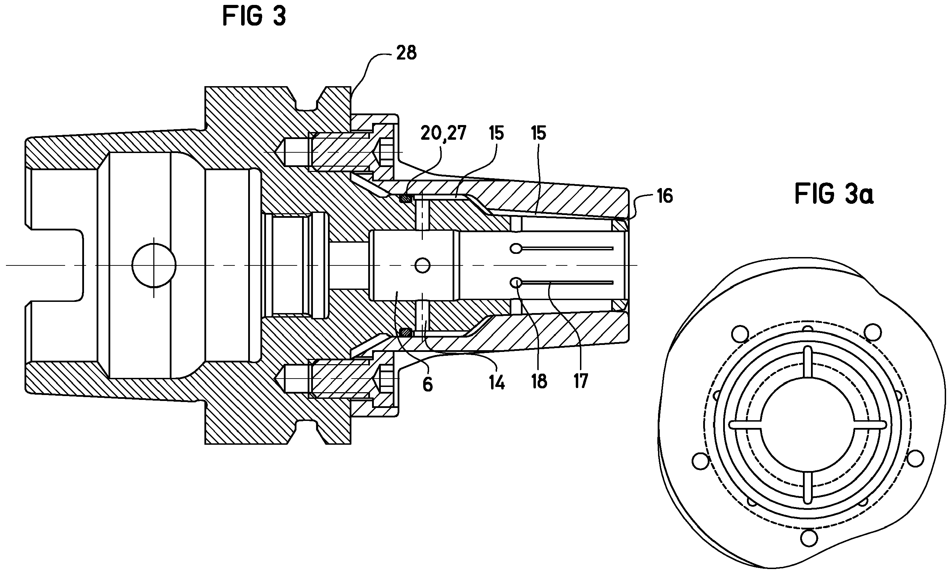

Weitere interessante Einzelheiten ergeben sich aus der Figur 3, die ein alternatives Ausführungsbeispiel beschreibt. Das bisher Gesagte gilt auch für dieses Ausführungsbeispiel, sofern das nachfolgend Beschriebene dem nicht offenkundig im Wege steht. Von Wiederholungen des bereits Beschriebenen wird daher abgesehen.

Dieses Ausführungsbeispiel zeichnet sich dadurch aus, dass es mit einer Werkzeugkühlung ausgestattet ist.

Zu diesem Zweck wird typischerweise Kühlschmierstoff von der Werkzeugmaschine über die hier als HSK-Kupplung ausgeführte Kupplung in das Innere des Werkzeugspannfutters herangeführt. Im vorliegenden Fall erfolgt die Heranführung vorteilhafterweise bis in den Auslaufbereich 6.

Bei diesem Ausführungsbeispiel ist der Auslaufbereich 6 durch radial nach außen verlaufende Bohrungen 14, oder zumindest eine einzelne Bohrung dieser Art, mit mindestens einem weiteren Kühlkanal verbunden. Dieser weitere Kühlkanal wird dadurch gebildet, dass beispielsweise in der Außenhülse 8 mindestens eine, im Wesentlichen in axialer Richtung verlaufende Kühlmittelnut 15 ausgebildet ist - so wie das die Figur 3 zeigt. Diese Kühlmittelnut mündet mit ihrer Öffnung 16 auf der freien Stirnringfläche der Hülsenpartie und gibt von hier aus Kühlmittel an das Werkzeug ab. Typischerweise sind mehrere, meist drei oder vier solcher Kühlmittelnuten 15 ausgebildet, vergleiche Figur 3a.

Damit das Kühlmittel - zwischen Innen- und Außenhülse nicht weiter nach innen eindringt, ist zwischen der Außenoberfläche der Innenhülse und der Innenoberfläche der Außenhülse ein Dichtungsring bzw. ein O-Ring 20 eingebracht - und zwar derart, dass er in einer Ringnut 27, welche in der Außenoberfläche der Innenhülse eingebracht ist, eingelegt ist.

Die Figur 3 zeigt eine weitere interessante Besonderheit, die bei einem erfindungsgemäßen Werkzeugspannfutter ausgeführt sein kann. Wie man sieht, kann die Innenhülse mindestens einen, meist mehrere Dehnschlitze 17 tragen. Diese Dehnschlitze 17 verlaufen typischerweise nicht in axialer Richtung durch die gesamte Innenhülse 7, sondern erstrecken sich nur entlang deren Mittenbereich zwischen den beiden unangetasteten Stirnringflächen. Es kann sinnvoll sein, wenn jeder dieser Dehnschlitze 17 an seinem einen, vorzugsweise dem freien Ende der Hülsenpartie abgewandten Ende eine Kerbentlastungsbohrung 18 aufweist.

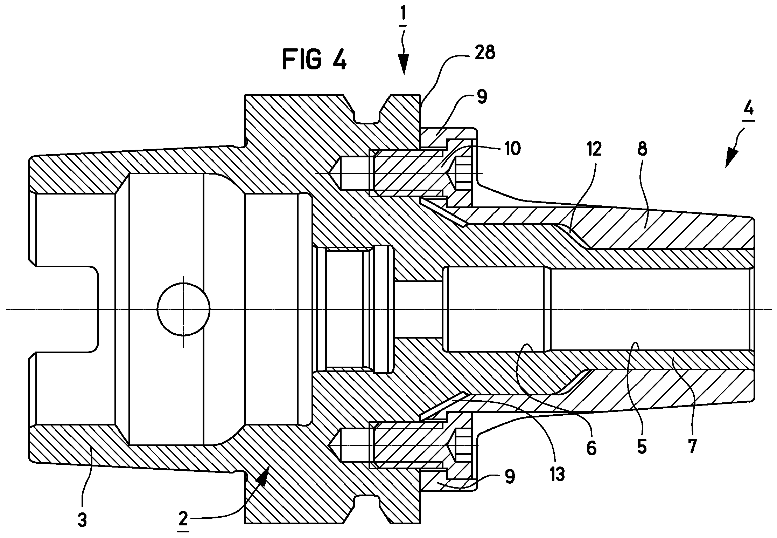

Statt der kegeligen Verpressung zwischen der Innenhülse 7 und der Außenhülse 8 kann eine Verpressung vorgesehen werden, wie sie die Figur 4 veranschaulicht, für die ebenfalls das bis hierher gesagte ebenfalls gilt sofern sich nicht aus dem Nachfolgenden etwas andere ergibt. Hier sind der Außenumfang der Innenhülse 7 und der Innenumfang der Außenhülse 8 jeweils zylindrisch ausgeführt, nicht kegelig. Es kommt dennoch zu einer Verpressung. Dies dadurch, dass der Außendurchmesser des Außenumfangs der Innenhülse 7 ein diametrales Übermaß gegenüber dem Innenumfangsdurchmesser der Außenhülse 8 hat. Die beiden Teile können dann wieder durch einen Schrumpfprozess gefügt werden oder dadurch, dass die Außenhülse 8 in axialer Richtung auf die Innenhülse 7 aufgepresst wird, mit einer entsprechenden Presse.

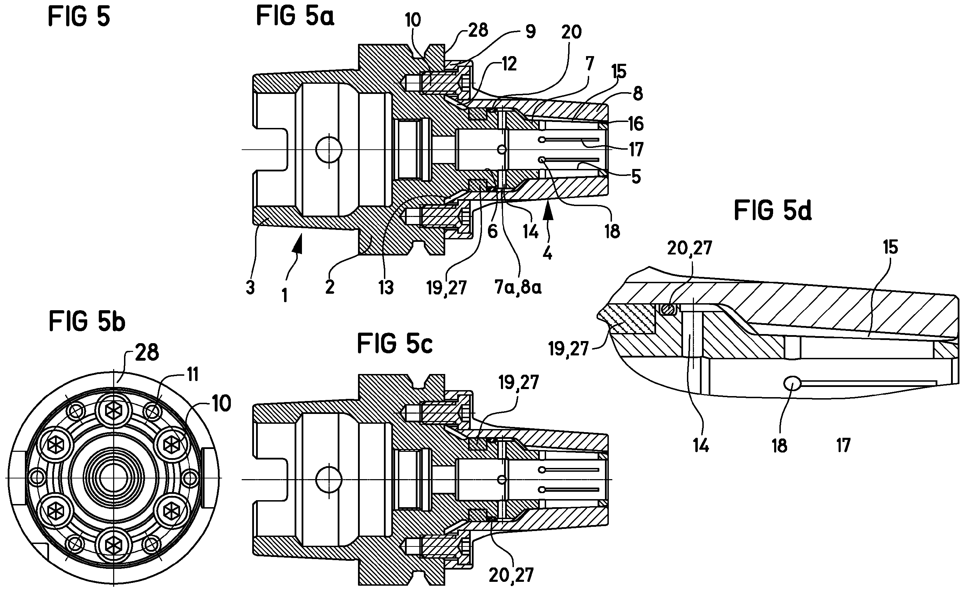

Weitere Merkmale ergeben sich auch aus den anderen Figuren, die beigefügt sind, vgl. weitere Figuren 5 bis 10, bzw. dortigen Ausführungen des Werkzeugspannfutters 1, aber momentan nicht im Detail erläutert werden. Oben beschriebene Merkmale (aus den Figuren 1 bis 4) weisen in den weiteren Figuren dort auch dieselben Bezugszeichen auf.

Eine interessante Variante, welche beispielsweise in den Figuren 5 bis 10 sichtbar ist, besteht darin - vorzugsweise axial im Anschluss an den Führungsbereich bzw. (manchmal auch als Zentrierbereich bezeichnet) 8a bzw. 7a - insbesondere aber nicht zwingend ausschließlich an dem Werkzeughaltergrundkörper 2 eine Nut 27 vorzusehen, in die ein Dämpfungs-Körper 19 eingelegt wird. Bei dem meist nichtmetallenen Dämpfungskörper 19 handelt es sich vorzugsweise um einen Gummi oder Kautschuk oder ein Elastomer.

Figur 5 zeigt darüber hinaus insbesondere auch wieder die Kühlschlitze bzw. Kühlbohrungen, die Dehnungsschlitze und den bzw. die Dämpfungs-Körper.

Figur 6 zeigt wiederum eine Variante, bei welche die Dehnungsschlitze und der bzw. die Dämpfungs-Körper 19 realisiert sind.

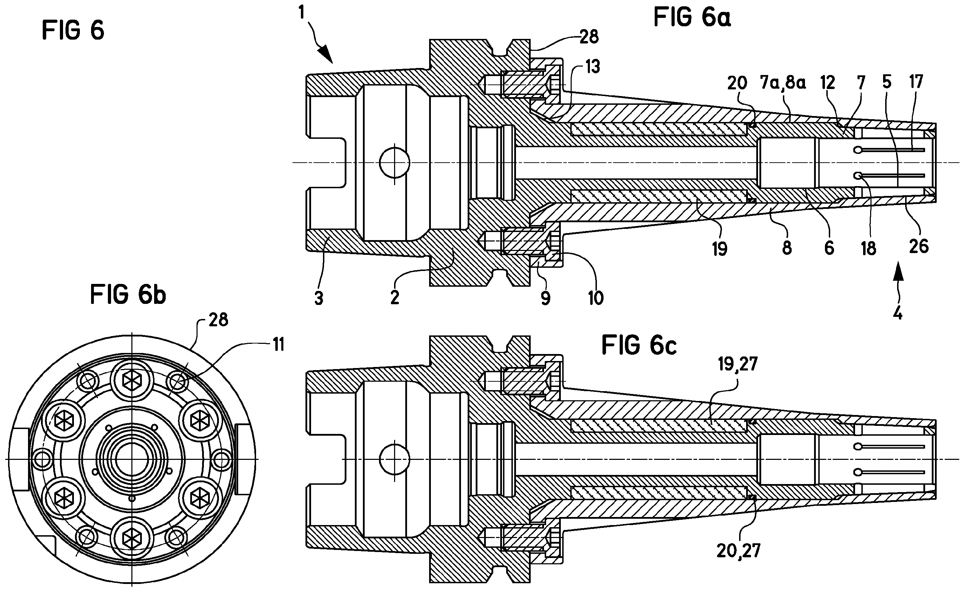

Darüber hinaus verdeutlicht Figur 6, dass zumindest die Außenumfangsfläche der Innenhülse 7 und/oder zumindest die Innenumfangsfläche der Außenhülse 8 eine schrumpftemperaturbeständige Beschichtung 26 trägt, die bevorzugt schwingungsverringernd wirkt.

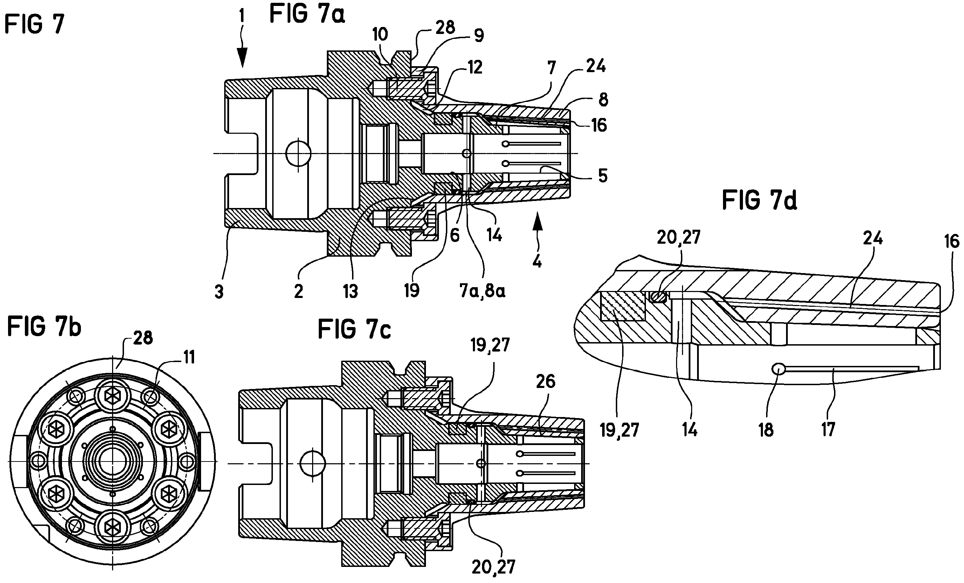

In der Variante nach Figur 7 ist eine Ausführung gezeigt, welche auch die Kühlschlitze bzw. Kühlbohrungen, die Dehnungsschlitze und den bzw. die Dämpfungs-Körper vorsieht.

Wie beispielsweise auch in Figur 7 verdeutlicht ist, befindet sich zwischen der Außenumfangsfläche der Innenhülse 7 und der Innenumfangs-/-oberfläche der Außenhülse 8 ein - in eine in der Außen(-ober-)fläche der Innenhülse 7 eingebrachte Ringnut 27 eingelegter Dichtungs-/O-Ring 20. Dieser kann einerseits dazu beitragen, zu verhindern, dass Kühlmittel nach innen läuft, andererseits kann er auch (schwingungs-)dämpfend wirken.

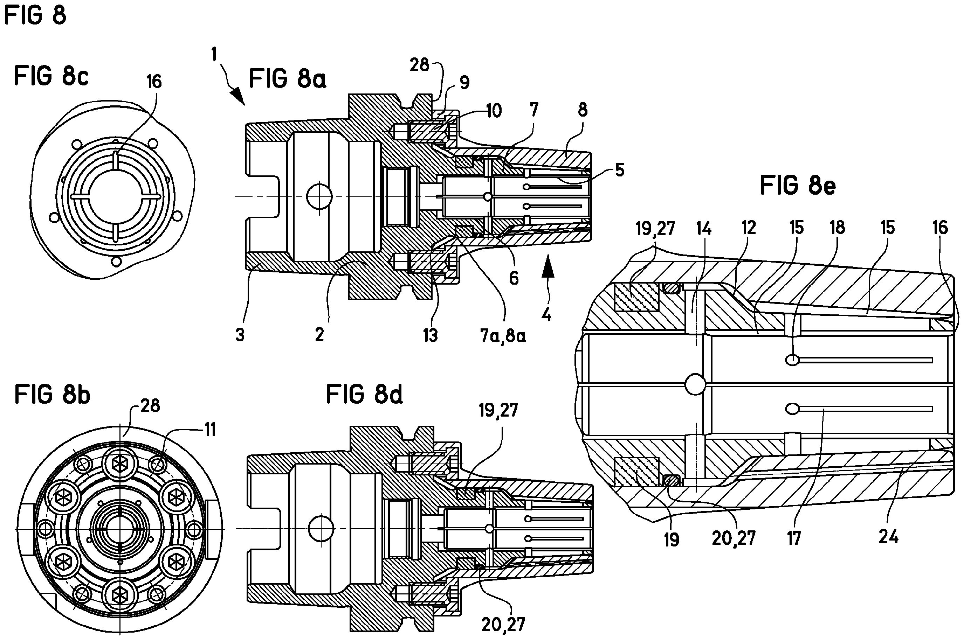

Figur 8 zeigt auch eine Variante, bei welcher die Kühlschlitze bzw. Kühlbohrungen, die Dehnungsschlitze und den bzw. die Dämpfungs-Körper realisiert sind. Wie Figur 8 auch zeigt ist hier

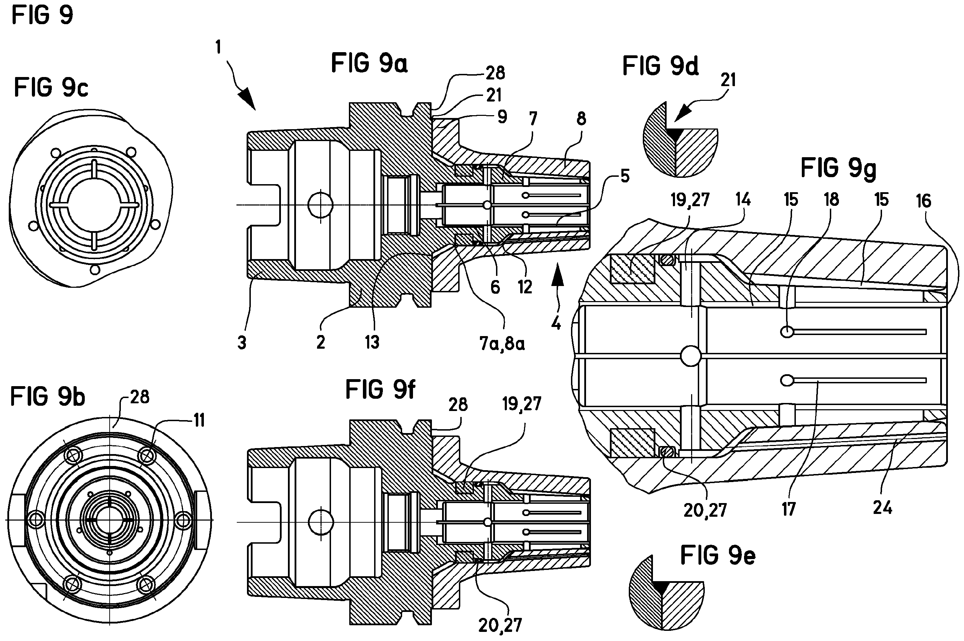

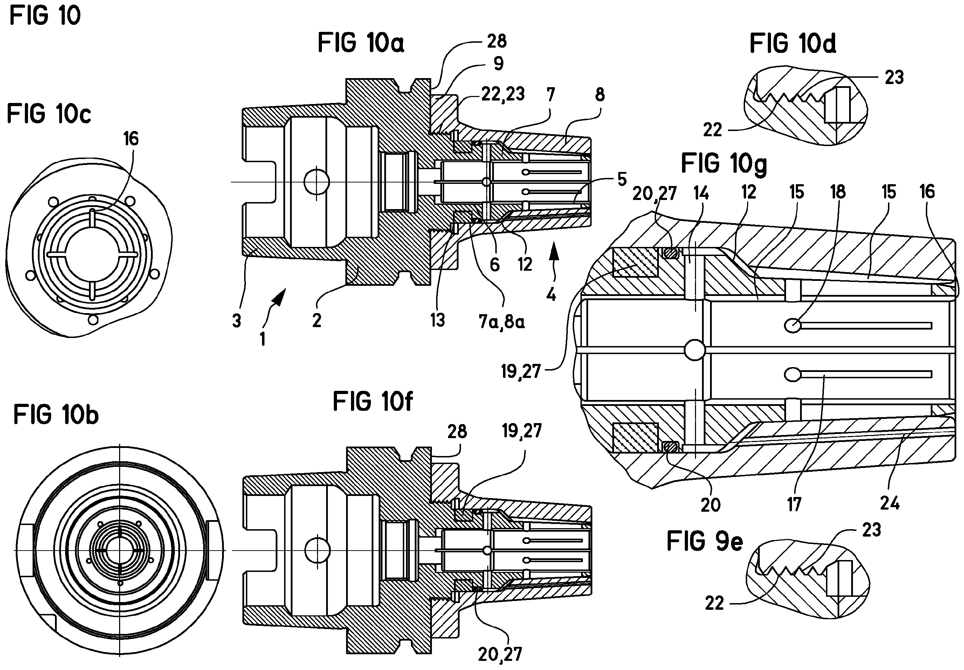

Eine weitere interessante Variation, welche in Figur 9 gezeigt ist, ist zum Beispiel auch die, dass man die Außenhülse 8 nicht mit Schrauben an der Innenhülse 7 festgelegt, sondern sie verschweißt 21. Zu diesem Zweck kann es sinnvoll sein die Außenhülse mit dem bereits angesprochenen Flansch zu versehen, aber den Flansch z. B. nicht mit Schraubenlöchern auszustatten, sondern ihn dazu zu benutzen um eine Verschweißung 21 zwischen der Außenhülse 8 und dem Spannfuttergrundkörper 2 herzustellen, wie abgebildet.

Eine auch weitere interessante Variation, welche in Figur 10 gezeigt ist, ist zum Beispiel auch die, dass man die Außenhülse 8 unmittelbar mit bzw. auf der Innenhülse 7 verschraubt ist. Dazu trägt die Innenhülse 7 ein Außengewinde 22 und die Außenhülse 8 ein komplementäres Innengewinde. Wie Figur 10 auch zeigt, sind auch hier wieder Kühlschlitze bzw. Kühlbohrungen, Dehnungsschlitze und Dämpfungs-Körper vorgesehen.

Der Vollständigkeit halber sei gesagt, dass alle in den Figuren gezeigten Merkmale einzelnen oder in Kombination erfindungswesentlich sein können, oder zumindest für die Erfindung förderlich sein können und daher auch zu gegebener Zeit zu beanspruchen sind.

### VERSCHIEDENES, MIT GENERELLER BEDEUTUNG

Die Innen- und die Außenhülse können auf Grund ihrer entsprechenden Gestaltung bevorzugt beide aktiv (und nicht nur fremderzeugte Radialpressung übertragend/weiterleitend) an der Erzeugung des Presssitzes mitwirken, wie im Rahmen dieser Offenbarung verschiedenen Orts genannt. In manchen Fällen übernimmt überwiegend oder im Wesentlichen die Außenhülse die aktive Erzeugung des Presssitzes.

Mit allgemeiner Bedeutung wird gesagt, dass auch für folgende Konstruktion zu gegebener Zeit Schutz beansprucht werden kann:
Der Werkzeughaltergrundkörper bildet eine einstückig an ihm feste, bevorzugt integral oder integral urgeformt mit ihm ausgebildete Innenhülse 7 aus und eine darauf aufgeschobene, körperlich separat davon hergestellte Außenhülse 8, die den gesamten, den im Wesentlichen gesamten oder den überwiegenden Teil bzw. optional und vorteilhaft mindestens 85% oder 70% oder 60% der den Werkzeugschaft haltenden Presskraft aufbringt.

Mit anderen Worten: Es kann auch Schutz für eine Konstruktion beansprucht werden, bei der nicht mehr der Werkzeughalter- oder Spannfuttergrundkörper als solcher, sondern erstmals ein auf ihn aufgeschobener, aber separater Schrumpfköper die thermisch generierte Schrumpfpressung erzeugt, im vorgenannten Umfang. Im extremen Sonderfall (aber bei Bedarf auch beansprucht) auch unter bloßer Zwischenlage einer dann nur passiven, nicht wesentlich an der aktiven Erzeugung der Schrumpfpressung beteiligen Hülse, die dann die Innenhülse darstellen mag und eine dämpfende Zwischenlage zwischen dem Werkzeugschaft und der für Ihn Presssitz generierenden Außenhülse.

Für alle Varianten kann es unter Dämpfungsgesichtspunkten ein entscheidendes optionales Kriterium sein, dass die Außen- und die Innenhülse im Wesentlichen nur reibschlüssig und (jedenfalls in Umfangsrichtung gesehen) nicht formschlüssig miteinander verbunden sind,

Diese jeweilige Anspruchsoffenbarung kann vorteilhafterweise mit anderen der hier aufgestellten Ansprüche und/oder Teilen davon und/oder Fragmenten der Beschreibung oder Merkmalen der Figuren kombiniert werden.

### BEZUGSZEICHENLISTE

- 1: Werkzeugspannfutter
- 2: Spannfuttergrundkörper
- 3: Ende
- 4: Hülsenpartie
- 5: Werkzeugaufnahme
- 6: Auslaufbereich
- 7: Innenhülse
- 7a: Zentrierabschnitt
- 8: Außenhülse
- 8a: Zentrierabschnitt
- 9: Befestigungsflansch
- 10: Schrauben zum Verpressen und ggf. Abdrücken
- 11: Durchgangslöcher, Abdrückbohrung/-gewinde
- 12: Übergangsabschnitt
- 13: flanschnaher Bereich
- 14: Bohrungen
- 15: Kühlmittelnut
- 16: Öffnung Kühlmittelnut
- 17: Dehnschlitze
- 18: Kerbentlastungsbohrung
- 19: Dämpfungs-Körper, -element, Elastomer
- 20: Dichtung, Dichtungsring, O-Ring
- 21: Schweißverbindung
- 22: Außengewinde (an der Innenhülse)
- 23: Innengewinde (an der Außenhülse)
- 24: Kühlmittelbohrung
- 26: Beschichtung
- 27: (Ring-)Nut
- 28: Ringschulter

## Patentansprüche

1. Werkzeugspannfutter (1) zum Spannen von einen Werkzeugschaft aufweisenden Werkzeugen, mit einer an ihrem freien Ende offenen Hülsenpartie (4) aus bevorzugt elektrisch leitendem Werkstoff, die eine Werkzeugaufnahme (5) zum reibschlüssigen Festsetzen des Werkzeugschafts im Presssitz durch Einschrumpfen ausbildet, **dadurch gekennzeichnet, dass** die Hülsenpartie (4) - vorzugsweise jedenfalls über die gesamte axiale Länge der Werkzeugaufnahme (5) hinweg - aus einer Innenhülse (7) besteht und einer diese im betriebsbereiten Zustand aufnehmenden, spielfrei mit ihr gefügten Außenhülse (8), die vorzugweise ebenfalls aus einem elektrisch leitenden Werkstoff besteht.

2. Werkzeugspannfutter (1) bevorzugt nach Anspruch 1, **dadurch gekennzeichnet, dass** die Außenhülse (8) mit der Innenhülse (7) auch dann durch Presssitz verbunden ist, wenn das Werkzeugspannfutter (1) Raumtemperatur aufweist und keinen Werkzeugschaft eingespannt hält.

3. Werkzeugspannfutter (1) bevorzugt nach Anspruch 1 oder 2, **dadurch gekennzeichnet, dass** die Außenhülse (8) so gestaltet ist, dass sie nach ihrem thermischen Aufweiten und dem Einstecken des bestimmungsgemäß zu spannenden Werkzeugschafts in die Innenhülse (7) beim Wiederabkühlen in ihrer Schrumpfung behindert wird, und dadurch zu einem wesentlichen Teil zu Erzeugung des Presssitzes beiträgt, in dem der Werkzeugschaft gehalten wird.

4. Werkzeugspannfutter (1) bevorzugt nach Anspruch 1, 2 oder 3, **dadurch gekennzeichnet, dass** die Innenhülse (7) so gestaltet ist, dass im kalten Zustand unter Spannung steht und sich beim thermischen Aufweiten der Außenhülse durch Verformung öffnet.

5. Werkzeugspannfutter (1) bevorzugt nach einem der vorhergehenden Ansprüche, **dadurch gekennzeichnet, dass** die Innenhülse (7) und die Außenhülse (8) aus unterschiedlichem Material bestehen, beispielsweise aus unterschiedlichen Stahlsorten, etwa in Gestalt eines gehärteten, insbesondere einsatzgehärteten und daher bevorzugt verschleißunempfindlichen Stahls für die Innenhülse (7) und eines Warmarbeitsstahls für die Außenhülse (8).

6. Werkzeugspannfutter (1) bevorzugt nach einem der vorhergehenden Ansprüche, **dadurch gekennzeichnet, dass** die Innenhülse (7) unlösbarer, bevorzugt integraler Bestandteil des Spannfuttergrundkörpers (2) ist, der auch die Kupplung zur Werkzeugmaschine ausbildet, vorzugweise als SK oder HSK-Kupplung.

7. Werkzeugspannfutter (1) bevorzugt nach einem der vorhergehenden Ansprüche, **dadurch gekennzeichnet, dass** die Innenhülse (7) eine zylindrische oder eine kegelige Außenumfangsfläche aufweist, und die Außenhülse (8) eine komplementäre, zylindrische oder kegelige Innenumfangsfläche aufweist und die Innen- (7) und die Außenhülse (8) durch Verpressung miteinander gefügt sind, wobei bei zylindrischer Ausführung beider Hülsen (7, 8) die Innenumfangsfläche der Außenhülse (8) ein diametrales Untermaß gegenüber der Außenumfangsfläche der Innenhülse (7) aufweist.

8. Werkzeugspannfutter (1) bevorzugt nach einem der vorhergehenden Ansprüche, **dadurch gekennzeichnet, dass** die Hülsenpartie (4) - vorzugsweise vollständig, im Wesentlichen oder weitgehend im Bereich außerhalb der axialen Erstreckung der Werkzeugaufnahme (5) einen Zentrierbereich (7a; 8a) ausbildet, indem die Innenhülse (7) einen vergrößerten Außendurchmesser aufweist und die Außenhülse (8) einen komplementären Innendurchmesser aufweist, der beim miteinander Verpressen der Innen- (7) und der Außenhülse (8) in axialer Richtung einen Führungsbereich (7a, 8a) bildet, in dem die Innen- (7) und die Außenhülse (8) erstmal in Kontakt miteinander kommen und dort ohne nennenswerte Pressung aneinander geführt werden, um insbesondere erst dann, im Zuge des weiteren Aufeinander Schiebens, außerhalb des Führungsbereichs (7a, 8a) in Pressung gelangen.

9. Werkzeugspannfutter (1) bevorzugt nach einem der vorhergehenden Ansprüche, **dadurch gekennzeichnet, dass** der Führungsbereich bzw. Zentrierbereich (7a; 8a) über einen bevorzugt kegeligen Übergangsabschnitt (12) in den der Werkzeugaufnahme (5) zugeordneten Abschnitt der Hülsenpartie (4) übergeht.

10. Werkzeugspannfutter (1) bevorzugt nach einem der vorhergehenden Ansprüche, **dadurch gekennzeichnet, dass** die Außenhülse (8) - bevorzugt in Aufschiebrichtung vor ihrem eventuellen Führungsbereich (7a, 8a) - einen Flansch (9) mit Durchgangslöchern (11) ausbildet, dem ein komplementärer Flansch oder eine komplementäre Ringschulter (10) mit Mutterngewindelöchern oder frei abstehenden Stehbolzen zugewandt ist, den bzw. die der Spannfuttergrundkörper (2) ausbildet, bevorzugt so, dass die Außenhülse (8) durch Verschraubung mit dem Spannfuttergrundkörper (2) auf die Innenhülse (7) aufgepresst werden kann, wobei bevorzugt Abdrückeinrichtungen zum Wiederabpressen der Außenhülse (8) vorgesehen sind, idealerweise mittels Druckschrauben.

11. Werkzeugspannfutter (1) bevorzugt nach einem der vorhergehenden Ansprüche, **dadurch gekennzeichnet, dass** die Außenhülse (8) und die Innenhülse (7) außerhalb des Bereichs der Werkzeugaufnahme (5) miteinander verschweißt oder verlötet sind, idealerweise dadurch, dass der Flansch (9) der Außenhülse (8) am Übergang zum komplementäre Gegenflansch oder der komplementären Ringschulter (10) des Werkzeughaltegrundkörpers (2) miteinander verschweißt oder verlötet sind.

12. Werkzeugspannfutter (1) bevorzugt nach einem der vorhergehenden Ansprüche, **dadurch gekennzeichnet, dass** zumindest die Außenumfangsfläche der Innenhülse (7) und/oder zumindest die Innenumfangsfläche der Außenhülse (8) eine schrumpftemperaturbeständige Beschichtung (26) trägt, die bevorzugt schwingungsverringernd wirkt.

13. Werkzeugspannfutter (1) bevorzugt nach einem der vorhergehenden Ansprüche, **dadurch gekennzeichnet, dass** die Innenhülse (7) einen oder bevorzugt mehrere Schlitze (17) aufweist, die jeweils meist mit Abstand von beiden - jeweils einen in Umfangsrichtung in sich geschlossenen Ring bildenden - Stirnendbereichen der Innenhülse (7) enden und/oder dessen oder deren mindestens eines Ende in einer gegenüber der Schlitzbreite diametral vergrößerten Bohrung (18) endet.

14. Werkzeugspannfutter (1) bevorzugt nach einem der vorhergehenden Ansprüche, **dadurch gekennzeichnet, dass** zwischen der Innenhülse (7) und der Außenhülse (8) mindestens ein Kühlmittelkanal (15) ausgebildet ist, der bevorzugt am freien Stirnende der Hülsenpartie (4) in im Wesentlichen axialer Richtung ausmündet, mit seiner Mündung (16), um dort Kühlmittel an das Werkzeug abzugeben, wobei der mindestens eine Kühlmittelkanal (15) vorzugsweise primär durch eine Nut in der Innenumfangsoberfläche der Außenhülse (8) gebildet wird oder durch eine umfangsseitig in sich geschlossene Bohrung durch die Außenhülse (8).

15. Werkzeugspannfutter (1) bevorzugt nach einem der vorhergehenden Ansprüche, **dadurch gekennzeichnet, dass** der Spannfuttergrundkörper (2) bzw. dessen Innenhülse (7), bevorzugt axial hinter der Werkzeugaufnahme (5), einen Einsatz, meist ring- oder zylinderringförmig gestaltet, aus dämpfendem Material besitzt, bevorzugt aus Gummi, Elastomer oder vergleichbarem Kunststoff.

16. Werkzeugspannfutter (1) bevorzugt nach einem der vorhergehenden Ansprüche, **dadurch gekennzeichnet, dass** der Spannfuttergrundkörper (2) bzw. dessen Innenhülse (7) im Bereich vor dem Einsatz aus dämpfendem Material einen Dichtungsring, bevorzugt in Gestalt einer Schnurdichtung, trägt.

17. Werkzeugspannfutter (1) bevorzugt nach einem der vorhergehenden Ansprüche, **dadurch gekennzeichnet, dass** der Einsatz aus dämpfendem Material und/oder der Dichtungsring in einem Bereich liegen, der beim Ein- und Ausschrumpfen von Werkzeugschäften, zumindest im Wesentlichen, frei von schädigender Erwärmung gehalten werden kann.

18. Verwendung eines Werkzeugspannfutters (1) gemäß eines der vorhergehenden Ansprüche zur Hochgeschwindigkeitszerspanung, insbesondere zum Hochgeschwindigkeitsfräsen, beides mit einer Schnittgeschwindigkeit von mehr als 800 m/min, besser mehr als 1.100 m/min.

19. Schutz wird auch für ein Werkzeugspannfutter (1) zum Spannen von einen Werkzeugschaft aufweisenden Werkzeugen beansprucht, das sich **dadurch kennzeichnet, dass** es eine Hülsenpartie (4) zum Einspannen oder Einschrumpfen eines Werkzeugschafts besitzt, und die Hülsenpartie (4) aus einer Innenhülse (7) besteht und einer diese im betriebsbereiten Zustand bevorzugt spielfrei idealerweise stets spielfrei aufnehmenden, auch beim Ein- oder Ausspannen so mit ihr gefügten Außenhülse (8), die vorzugsweise beide aktiv und wesentlich an der Erzeugung des den Werkzeugschaft haltenden Presssitzes beteiligt sind.

20. Werkzeugspannfutter (1) nach Anspruch 19, **dadurch gekennzeichnet, dass** das Werkzeugspannfutter (1) auch einzelne oder alle Merkmale eines oder mehrerer der vorhergehenden Ansprüche aufweist und/oder der zugehörigen Zeichnungen bzw. der Kurzbeschreibung.

21. Werkzeugspannsystem aus mindestens einem Werkzeugspannfutter (1) gemäß einem der vorhergehenden Ansprüche und einem in Bezug auf seinen Schaftnenndurchmesser darauf abgestimmten Schaftwerkzeug.
